(19) **Europäisches Patentamt**
**European Patent Office**
**Office européen des brevets**

(11) **EP 1 298 365 B1**

(12) **EUROPÄISCHE PATENTSCHRIFT**

(45) Veröffentlichungstag und Bekanntmachung des Hinweises auf die Patenterteilung:
**02.09.2009 Patentblatt 2009/36**

(21) Anmeldenummer: **02012148.9**

(22) Anmeldetag: **01.06.2002**

(51) Int Cl.:
***F16J 15/08*** *(2006.01)*

(54) **Metallische Zylinderkopfdichtung**

Metallic cylinder head gasket

Joint de culasse métallique

(84) Benannte Vertragsstaaten:
**DE FR GB IT**

(30) Priorität: **29.09.2001 DE 10148295**
**06.12.2001 EP 01128978**
**19.04.2002 DE 10217526**

(43) Veröffentlichungstag der Anmeldung:
**02.04.2003 Patentblatt 2003/14**

(73) Patentinhaber: **ElringKlinger AG**
**72581 Dettingen (DE)**

(72) Erfinder:
• **Diez, Armin**
**73252 Lenningen (DE)**
• **Schmauder, Karl**
**72584 Hülben (DE)**

(74) Vertreter: **Hoeger, Stellrecht & Partner**
**Patentanwälte**
**Uhlandstrasse 14c**
**70182 Stuttgart (DE)**

(56) Entgegenhaltungen:
**EP-A- 0 928 912          WO-A-98/28559**
**DE-U- 29 804 534**

**Beschreibung**

Die Erfindung betrifft eine Zylinderkopfdichtung mit einer mindestens eine Brennraumöffnung aufweisenden Dichtungsplatte, welche wenigstens zwei Metallblechlagen aufweist, von denen eine erste mit mindestens einer elastisch höhenverformbaren, die Brennraumöffnung umschließenden Sicke und eine zweite mit mindestens einer die Sickenverformung begrenzenden, die Brennraumöffnung umgebenden und der Sicke in einer Draufsicht auf die Dichtungsplatte benachbarten Verformungsbegrenzungsvorrichtung versehen ist; eine solche Verformungsbegrenzungsvorrichtung wird üblicherweise und deshalb teilweise auch im folgenden als Stopper bezeichnet.

Bei ein- oder mehrlagigen metallischen Zylinderkopfdichtungen war es bislang üblich, zur Erzeugung eines Stoppers radial innerhalb oder außerhalb (bezüglich der Brennraumöffnung) der eine Abdichtfunktion ausübenden Sicke die Dicke einer Metallblechlage in einem die Brennraumöffnung kreisringförmig umschließenden Bereich dadurch zu vergrößern, daß auf diese Metallblechlage ein flacher metallischer Ring aufgebracht wurde (beispielsweise durch Aufschweißen) oder daß ein die Brennraumöffnung umgebender Randbereich der Metallblechlage umgebördelt, d. h. um ca. 180° umgefaltet wurde. Ein derartiger Stopper hat zumindest nahezu keine elastischen Eigenschaften und in den meisten Fällen auch zumindest nahezu keine plastischen Eigenschaften, jedenfalls unter den im Motorbetrieb auf den Stopper ausgeübten Druckkräften.

Neuerdings sind ein- oder mehrlagige metallische Zylinderkopfdichtungen vorgeschlagen worden (WO 98/28559 und DE-U-298 04 534), bei denen der Stopper unter den im Motorbetrieb auf ihn einwirkenden Druckkräften in erheblichem Maße plastisch und/oder elastisch, vorzugsweise überwiegend elastisch verformbar ist und eine der folgenden Gestaltungen aufweist: Die mit dem Stopper versehene Metallblechlage ist (bezüglich der Brennraumöffnung) radial innerhalb der zu schützenden, die Abdichtfunktion übernehmenden Sicke mit einer oder mehreren, den Stopper bildenden Sicken versehen, welche die Brennraumöffnung ringförmig umschließen und konzentrisch zu dieser verlaufen, wobei im Falle mehrerer Sicken diese abwechselnd in die eine oder andere Richtung der Achse der Brennraumöffnung vorspringen können (siehe Figuren 12A und 12B der WO 98/28559); alternativ wird der Stopper von einer Serie von in radialer Richtung abwechselnd aufeinanderfolgenden Rippen und Rillen gebildet, welche die Brennraumöffnung ringförmig umschließen und an beiden Seiten der Metallblechlage vorgesehen sind, wobei die Rippen über die beiden Hauptoberflächen der Metallblechlage vorstehen und so im Bereich des Stoppers zu einer Verdickung der Metallblechlage führen, jeder Rippe der einen Seite der Metallblechlage eine Rippe auf der anderen Seite der Metallblechlage unmittelbar gegenüberliegt (gleiches gilt dann für die Rillen) und die Rippen sowie Rillen durch Fließpressen der Metallblechlage erzeugt wurden (Fig. 12E der WO 98/28559 sowie DE-U-298 04 534). Diese Stopper lassen sich zwar einfacher herstellen als auf eine Metallblechlage aufgebrachte oder durch Umbördeln einer Metallblechlage erzeugte Stopper, da sich eine mit Sicken versehene Metallblechlage gegebenenfalls in einem einzigen Werkzeug ausstanzen und mit den Sicken versehen läßt, und weil gegebenenfalls mit einem einzigen Werkzeug eine Metallblechlage ausgestanzt und mit den vorstehend beschriebenen Rippen und Rillen versehen werden kann; andererseits haben die neuerdings vorgeschlagenen Stopper einen gravierenden Nachteil:

Die wesentliche Aufgabe eines Stoppers ist es, die die Abdichtfunktion zumindest hauptsächlich übernehmende Sicke im Motorbetrieb vor übermäßigen Verformungen zu schützen, eine Aufgabe, welche ein im Motorbetrieb nicht unerheblich elastisch und/oder plastisch verformbarer Stopper nur höchst unzureichend erfüllen kann. Wird der Stopper von einer die Brennraumöffnung kreisringförmig umschließenden Sicke oder von mehrere solchen konzentrisch zueinander angeordneten Sicken gebildet, kann die zwischen Motorblock und Zylinderkopf eingespannte Zylinderkopfdichtung der Abflachung der Sicken auch keinen erheblichen Widerstand entgegensetzen (sieht man einmal von der Steifigkeit der Sicken ab), da bei diesen bekannten Zylinderkopfdichtungen eine mit der Abflachung der den Stopper bildenden Sicken einhergehende Verschiebung (in bezüglich der Brennraumöffnung radialer Richtung) des die Brennraumöffnung umgebenden Bereichs der Metallblechlage nicht zu verhindern ist.

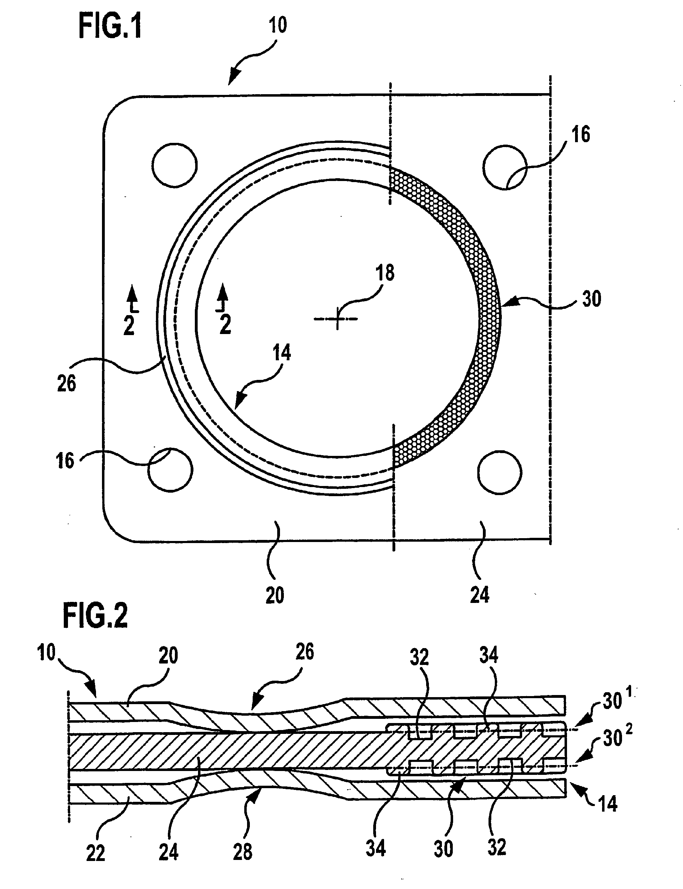

In der älteren deutschen Patentanmeldung Nr. 101 48 295.7 vom 29.09.2001 der Firma ElringKlinger AG werden anhand der Figuren 1 bis 16 ein- oder mehrlagige metallische Zylinderkopfdichtungen beschrieben, bei denen ein in einer Metallblechlage ausgebildeter Stopper in einer Draufsicht auf diese Blechlage ein zweidimensionales Muster von diskreten, noppenförmigen Erhebungen bildet, welche in einem Tiefziehwerkzeug erzeugt wurden; letzteres besitzt eine Patrize mit einem Muster von stiftförmigen Stempeln sowie eine Matrize mit einem entsprechenden Muster von Öffnungen oder Ausnehmungen, in welche beim Tiefziehen der Blechlage die den Stopper bildenden Erhebungen hineingedrückt werden. Bei diesem Stopper liegt also einer jeden Erhebung eine Vertiefung auf der anderen Seite der Blechlage unmittelbar gegenüber.

Aufgabe der vorliegenden Erfindung war es, eine mindestens im wesentlichen metallische Zylinderkopfdichtung zu schaffen, bei der man bei der Herstellung der Verformungsbegrenzungsvorrichtung (Stopper) gleichfalls ohne das Aufbringen eines Metallrings oder das Umbördeln einer Metallblechlage auskommt, bei der jedoch die Verformungsbegrenzungsvorrichtung ihren Zweck, nämlich eine übermäßige Verformung bzw. Abflachung einer eine Abdichtung bewirkenden Sicke im Motorbetrieb zu verhindern, noch besser erfüllen kann als die vorstehend beschriebenen bekannten Stopper aus einer oder mehreren, die Brennraumöffnung konzentrisch umschließenden Sicken bzw. Rippen und Rillen, oder eine Verformungsbegrenzungsvorrichtung aus einem Muster von in einem Tiefziehwerkzeug hergestellten Erhebungen einer Blechlage.

Ausgehend von einer Zylinderkopfdichtung der eingangs erwähnten Art, bei der die Verformungsbegrenzungsvorrichtung durch eine solche plastische Verformung der zweiten Blechlage gebildet wird, daß die letztere in mindestens einer ihrer Hauptoberflächen im Bereich der Verformungsbegrenzungsvorrichtung ein Muster von eingeprägten Vertiefungen aufweist, welchen durch beim Einprägen der Vertiefungen verdrängtes Material der zweiten Blechlage gebildete Erhebungen zugeordnet sind, wobei die Gesamtdicke der zweiten Blechlage im Bereich der Verformungsbegrenzungsvorrichtung größer ist als die originäre Dicke der zweiten Blechlage in einem an die Verformungsbegrenzungsvorrichtung angrenzenden Bereich dieser Blechlage, läßt sich diese Aufgabe erfindungsgemäß dadurch lösen, daß die originäre, d. h. ursprüngliche zweite Blechlage von einem durch Fließpressen, insbesondere durch Kaltfließpressen, plastisch verformbaren Stahlblech gebildet wird und in einer Draufsicht auf die zweite Blechlage die Verformungsbegrenzungsvorrichtung ein zweidimensionales Muster von diskreten, napfartigen Vertiefungen bildet, wobei das Gesamtvolumen der durch Kaltfließpressen eingeprägten Vertiefungen mindestens ungefähr gleich dem Gesamtvolumen der durch das beim Einprägen der Vertiefungen verdrängte Material der zweiten Blechlage gebildeten, den Vertiefungen zugeordneten Erhebungen ist.

Anders als bei einer mit einer elastisch höhenverformbaren Abdichtsicke versehenen Metallblechlage, welche wegen der zu fordernden federelastischen Eigenschaften der Sicke aus einem Federstahlblech bestehen muß, ist bei einer erfindungsgemäßen Zylinderkopfdichtung die Verformungsbegrenzungsvorrichtung an einer durch Fließpressen plastisch verformbaren Stahlblechlage ausgebildet, d. h. an einer Blechlage aus einem so duktilen Stahl, daß sich die Erhebungen des Stoppers dadurch herstellen lassen, daß beim Einprägen der Vertiefungen Material der zweiten Blechlage im Wege des Fließpressens so verdrängt wird, daß das verdrängte Material den Vertiefungen zugeordnete Erhebungen bildet. Bei der Herstellung eines erfindungsgemäßen Stoppers wird das Material der zweiten Blechlage zumindest nahezu überall entsprechend einem auch in Umfangsrichtung der Brennraumöffnung aus aufeinanderfolgenden, diskreten Vertiefungen gebildeten Muster hochgradig umgeformt und dabei hochgradig kaltverfestigt, so daß sich ein außerordentlich widerstandsfähiger Stopper ergibt. Da bei der erfindungsgemäßen Zylinderkopfdichtung die Vertiefungen und Erhebungen nicht durch Tiefziehen, sondern durch Fließpressen erzeugt werden und das Material der Blechlage natürlich inkompressibel ist, ergeben sich Vertiefungen und Erhebungen, für die gilt, daß das Gesamtvolumen der durch Fließpressen eingeprägten Vertiefungen mindestens ungefähr gleich dem Gesamtvolumen der Erhebungen ist, welche durch das beim Einprägen der Vertiefungen verdrängte Material der zweiten Blechlage gebildet werden - diese Volumenverhältnisse treffen auf mittels eines Tiefziehwerkzeugs in einer Blechlage erzeugte Vertiefungen und Erhebungen nicht zu, denn dort ist aufgrund der Art der Verformung der Blechlage das Gesamtvolumen der Vertiefungen immer beträchtlich kleiner als das Gesamtvolumen der Erhebungen.

Nur der Vollständigkeit halber sei noch darauf hingewiesen, daß es bei mehrlagigen metallischen Zylinderkopfdichtungen bekannt ist, in eine oder mehrere Metallagen ein Muster von napfartigen Vertiefungen hineinzudrücken, welchen dann auf der anderen Seite der Metallage noppenförmige Erhebungen gegenüberliegen (siehe EP-A-0 470 790, Fig. 7); zum einen dienen diese Erhebungen jedoch ausschließlich dem Zweck, den Wärmeübergang zwischen Motorblock und Zylinderkopf dadurch zu minimieren, daß auch in der eingebauten Zylinderkopfdichtung deren Metallagen in Abständen voneinander gehalten werden, und zum anderen sind bei dieser bekannten Zylinderkopfdichtung die Abstände zwischen einander benachbarten Erhebungen so groß, daß das Noppenmuster eine für einen Stopper völlig unzureichende Abstützfunktion haben würde, verbunden mit einer viel zu geringen Verformungssteifigkeit des Noppenmusters.

Wenn vorstehend von der originären Dicke der zweiten Blechlage die Rede war, so ist hierunter die Dicke der ebenen Blechlage vor jeder Verformung zu verstehen. Durch die Definition, daß die Vertiefungen (in einer Draufsicht auf die zweite Blechlage) ein zweidimensionales Muster (oder Raster) bilden, soll zum Ausdruck gebracht werden, daß, anders als bei einer Serie von ringförmigen, konzentrischen Rillen, diskrete Vertiefungen nicht nur in bezüglich der Brennraumöffnung radialer Richtung aufeinanderfolgen, sondern auch in Umfangsrichtung der Brennraumöffnung. Schließlich sei bezüglich der vorstehend definierten Volumenverhältnisse darauf hingewiesen, daß die Volumina zu messen sind bezüglich der einen oder der beiden Ebenen, welche von der einen oder beiden Hauptoberflächen eines an die Verformungsbegrenzungsvorrichtung angrenzenden, unverformten Bereichs der zweiten Blechlage definiert werden - weist die zweite Blechlage nur auf ihrer einen Seite Vertiefungen und Erhebungen auf, zählen also nur die Volumina derjenigen Bereiche der Vertiefungen bzw. Erhebungen, welche unterhalb bzw. oberhalb derjenigen Ebene liegen, die von dieser Seite der Blechlage (in einem unverformten Bereich der Blechlage) definiert wird; besitzt die Blechlage auf ihrer einen Seite nur Vertiefungen und auf ihrer anderen Seite nur Erhebungen oder auf jeder der beiden Seiten Erhebungen und Vertiefungen, so sind die Volumina bezüglich der beiden Ebenen zu messen, welche von den beiden Hauptoberflächen eines an die Verformungsbegrenzungsvorrichtung angrenzenden Bereichs der zweiten Blechlage definiert werden. Hierauf wird später in Verbindung mit den beigefügten Zeichnungen noch einmal einzugehen sein.

Insbesondere dann, wenn die Zylinderkopfdichtung nur zwei Blechlagen aufweist, so daß die zweite Blechlage nur einseitig eine Stopperfunktion zu übernehmen hat, wird man die Vertiefungen und Erhebungen lediglich an einer der beiden Hauptoberflächen der zweiten Blechlage ausbilden. In diesem Fall weist das Fließpreßwerkzeug zur Erzeugung der Verformungsbegrenzungsvorrichtung nur ein Werkzeugteil mit einem Muster von Prägestempeln zur Erzeugung der Vertiefungen sowie ein zweites Werkzeugteil mit einer ebenen Auflagefläche für die zweite Blechlage auf, da das bei der Erzeugung der Vertiefungen durch die Prägestempel verdrängte Material der zweiten Blechlage um die Prägestempel herum nach oben steigt und so die Erhebungen bildet. Alternativ können für diesen Fall die Vertiefungen lediglich in die eine Hauptoberfläche der zweiten Blechlage eingeprägt und die Erhebungen nur an der anderen Hauptoberfläche der zweiten Blechlage ausgebildet sein; das Fließpreßwerkzeug besteht dann aus einer mit einem Muster von Prägestempeln versehene Patrize und einer Matrize mit Öffnungen oder Aussparungen, in die die Erhebungen hineingedrückt werden.

Vor allem dann, wenn die Zylinderkopfdichtung zwei mit Sicken versehene erste Blechlagen und zwischen diesen eine mit einer oder mehreren Verformungsbegrenzungsvorrichtungen versehene zweite Blechlage aufweist, wird man die Konstruktion so gestalten, daß die mindestens eine Verformungsbegrenzungsvorrichtung in einer Draufsicht auf jede der beiden Hauptoberflächen der zweiten Blechlage jeweils ein zweidimensionales Muster von diskreten, eingeprägten napfartigen Vertiefungen und ein entsprechendes zweidimensionales Muster von Erhebungen bildet. Das Fließpreßwerkzeug hat in diesem Fall zwei Werkzeughälften, von denen jede mit einem Muster von Prägestempeln und mit einem Muster von Ausnehmungen oder Öffnungen zum Hineindrücken der Erhebungen versehen ist. Bei einem solchen Stopper können den Vertiefungen der einen Seite Erhebungen auf der anderen Seite unmittelbar gegenüberliegen, d. h. die Vertiefungen der einen Seite sind gegenüber den Vertiefungen der anderen Seite versetzt, der Stopper kann aber auch so ausgebildet sein, daß den Vertiefungen der einen Seite Vertiefungen der anderen Seite unmittelbar gegenüberliegen, so daß sich auch die Erhebungen der beiden Seiten unmittelbar gegenüberliegen - in diesem Fall steigt das beim Prägen der Vertiefungen der einen Seite der Blechlage verdrängte Material um die Prägestempel herum nach oben und bildet so auf dieser Seite die Erhebungen.

Ist das Fließpreßwerkzeug so ausgebildet, daß das beim Prägen der Vertiefungen in die eine Blechlagenseite verdrängte Material um die Prägestempel herum nach oben steigt und nicht aus der anderen Blechlagenseite herausgedrückt wird, können die Erhebungen in einer Draufsicht auf die mit den Vertiefungen versehene Blechlagenseite die jeweilige Vertiefung ringförmig oder nach Art eines Mehrecks umschließen; da jedoch ein möglichst dichtes Muster von Vertiefungen und Erhebungen angestrebt wird, können die Vertiefungen und Erhebungen in einer Draufsicht auf die zweite Blechlage aber auch ein Schachbrett-ähnliches Raster bilden. In jedem Fall bildet die Verformungsbegrenzungsvorrichtung in einer Draufsicht auf die zweite Blechlage ein zweidimensionales Muster von diskreten, noppenförmigen Erhebungen, wobei innerhalb einer jeden Noppe eine Vertiefung liegen kann.

Um die mit der Sicke versehene Blechlage durch den Stopper gut abzustützen, empfehlen sich Ausführungsformen, bei denen die Kuppen der Erhebungen parallel oder zumindest ungefähr parallel zu der von der Dichtungsplatte definierten Ebene verlaufen. Für die Herstellung eines solchen Stoppers empfiehlt sich ein Verfahren, bei dem die Erhebungen zunächst mit einer größeren als ihrer endgültigen Höhe erzeugt und sodann durch eine teilweise derartige Rückverformung auf ihre endgültige Höhe gebracht werden, daß die Kuppen der Erhebungen ungefähr parallel zu der von der Dichtungsplatte definierten Ebene verlaufen. Dadurch lassen sich die Erhebungen in ihrer Höhe auch exakt kalibrieren.

Wie bereits erwähnt, wird beim Fließpressen der zweiten Blechlage deren Material im Stopperbereich hochgradig umgeformt und verfestigt; deshalb zeichnen sich bevorzugte Ausführungsformen der erfindungsgemäßen Zylinderkopfdichtung dadurch aus, daß die Erhebungen unter den im Motorbetrieb auf die Erhebungen ausgeübten Druckkräften zumindest nahezu unelastisch sind und/oder zumindest nahezu keine plastischen Eigenschaften aufweisen. In jedem Fall ist anzustreben, daß rings um die betreffende Brennraumöffnung herum die senkrecht zur Dichtungsplatte gemessene Federkonstante der Verformungsbegrenzungsvorrichtung überall größer ist als die Federkonstante der durch den Stopper zu schützenden, dem Stopper benachbarten Sicke.

Aus Gründen der anzustrebenden Steifigkeit und einer möglichst gleichmäßigen Tragstruktur des Stopper empfiehlt es sich, ein möglichst dichtes Muster von Vertiefungen bzw. Erhebungen vorzusehen, d. h. den Stopper so zu gestalten, daß in einer Draufsicht auf die zweite Blechlage die eingeprägten Vertiefungen lediglich einen fertigungstechnisch bedingten minimalen Abstand voneinander aufweisen, d. h. die Vertiefungen so nahe beieinander anzuordnen, wie dies fertigungstechnisch eben noch machbar ist. Bei bevorzugten Ausführungsformen liegt in einer Draufsicht auf die zweite Blechlage der Abstand A einander benachbarter Vertiefungen voneinander in der Größenordnung des Durchmessers D einer solchen Vertiefung, was bedeuten soll, daß gilt

$$\frac{1}{2} D \leq A \leq 2D.$$

Der durch den Stopper herbeigeführte Schutz gegen eine übermäßige Verformung der dem Stopper (in einer Draufsicht auf die Dichtungsplatte) benachbarten Sicke läßt sich im einfachsten Fall dadurch erreichen, daß für jede Sicke nur ein einziger Stopper vorgesehen wird, so daß in einer Draufsicht auf die Dichtungsplatte der Stopper bzw. die Verformungsbegrenzungsvorrichtung insbesondere radial innerhalb, gegebenenfalls aber auch radial außerhalb der benachbarten Sicke angeordnet ist; es kann aber auch ein sogenannter Doppelstopper vorgesehen werden, so daß in einer Draufsicht auf die Dichtungsplatte sowohl radial innerhalb, als auch radial außerhalb der Sicke jeweils eine Verformungsbegrenzungsvorrichtung vorgesehen ist.

Die für das Einprägen der Vertiefungen verwendeten Prägestempel können im Querschnitt mehreckig, z. B. rechteckig, aber auch kreisrund sein, ebenso kommen kegel- oder kegelstumpfförmige, pyramiden- oder pyramidenstumpfförmige Prägestempel in Frage. Bei im Querschnitt mehreckigen Prägestempeln empfiehlt es sich, diese so anzuordnen und auszubilden, daß die mit ihrer Hilfe erzeugten Vertiefungen ein Wabenmuster bilden, welches das dichteste Muster von Vertiefungen darstellt. In jedem Fall wird es sich empfehlen, den Stopper so zu gestalten, daß die Vertiefungen ein regelmäßiges Muster bilden und/oder daß alle Vertiefungen mindestens ungefähr gleich gestaltet sind (in diesem Fall sind dann auch alle Erhebungen mindestens ungefähr gleich ausgebildet).

Da sich bei der Herstellung des Stoppers durch Fließpressen seitliche Verlagerungen von Bereichen der zweiten Blechlage ergeben können, kann es auch empfehlenswert sein, die Brennraumöffnung aus der zweiten Blechlage erst nach der Erzeugung des Stoppers auszustanzen, um so zu garantieren, daß die Brennraumöffnung exakt die gewünschte Kontur und Position aufweist.

Wenn vorstehend davon die Rede war, daß das Gesamtvolumen der Vertiefungen mindestens ungefähr gleich dem Gesamtvolumen der Erhebungen sein soll, so ist hierunter zu verstehen, daß die Gesamtvolumina auch um bis zu 10 % voneinander abweichen können, da beim Einprägen der Vertiefungen verdrängtes Material der zweiten Blechlage auch seitlich wegfließen kann, insbesondere in den Randbereichen (in der Draufsicht auf den Stopper gesehen) der Verformungsbegrenzungsvorrichtung.

Während bei Zylinderkopfdichtungen für die mit Abdichtsicken versehenen Blechlagen Federstahlblech verwendet werden muß, um zu gewährleisten, daß die Sicken dauerhaft elastisch höhenverformbar sind, wird bei einer erfindungsgemäßen Zylinderkopfdichtung für die mit dem Stopper bzw. den Stoppern versehene zweite Metallblechlage die Verwendung eines duktilen unlegierten Stahls empfohlen, wie z. B. St4LG oder St4K50 (nach DIN-Norm), damit sich der Stopper durch Kaltfließpressen problemlos herstellen läßt, insbesondere dann, wenn für die mit dem Stopper zu versehende Blechlage ein verhältnismäßig dickes Blech verwendet wird - vorzugsweise beträgt die Blechstärke 0,2 bis 1,4 mm.

Ist die Blechlage beidseitig mit Erhebungen versehen, beträgt der Überstand der Erhebungen über die originäre Blechlage insbesondere 0,05 bis 0,10 mm; weist die zweite Blechlage nur an einer Seite Erhebungen auf, beträgt deren Überstand insbesondere 0,10 bis 0,20 mm.

Bei der erfindungsgemäßen Zylinderkopfdichtung kann es sich auch um eine solche für einen Einzylindermotor oder um eine sogenannte Einzeldichtung für einen Mehrzylindermotor handeln - bei solchen Mehrzylindermotoren mit Einzeldichtungen ist für jeden Brennraum eine separate Zylinderkopfdichtung vorgesehen, so daß mehrere nebeneinanderliegende Einzeldichtungen zwischen Motorblock und Zylinderkopf eingespannt sind. Je nach dem besitzt also eine erfindungsgemäße Zylinderkopfdichtung nur eine einzige Brennraumöffnung oder mehrere Brennraumöffnungen, wobei für jede Brennraumöffnung eine oder mehrere Abdichtsicken und eine oder mehrere Verformungsbegrenzungsvorrichtungen vorgesehen sein können.

Weitere Merkmale, Vorteile und Einzelheiten der Erfindung ergeben sich aus der nachfolgenden Beschreibung sowie der beigefügten zeichnerischen Darstellung besonders vorteilhafter Ausführungsformen der Erfindung. In der Zeichnung zeigen:

Fig. 1     eine Draufsicht auf einen Teil einer erfindungsgemäßen Zylinderkopfdichtung, bei der ein Teil der obersten Blechlage weggebrochen wurde;

Fig. 2     einen Schnitt nach der Linie 2-2 in Fig. 1;

Fig. 3     eine schaubildliche Darstellung eines Teils der zweiten Blechlage der in den Figuren 1 und 2 gezeigten Zylinderkopfdichtung, und zwar des mit dem Stopper versehenen Bereichs dieser Blechlage;

Fig. 4     eine der Fig. 2 entsprechende Schnittdarstellung durch eine zweite Ausführungsform mit modifiziertem Stopper;

Fig. 5     eine der Fig. 2 entsprechende Schnittdarstellung durch eine dritte Ausführungsform mit einer nur aus zwei Blechlagen zusammengesetzten Dichtungsplatte, und

Fig. 6     eine der Fig. 5 entsprechende Darstellung einer weiteren Ausführungsform einer zweilagigen Dichtung.

Die Fig. 1 zeigt eine Zylinderkopfdichtung mit einer Dichtungsplatte 10, welche aus drei Metallblechlagen (siehe Fig. 2) zusammengesetzt ist und aus der zumindest im wesentlichen kreisrunde Brennraumöffnungen 14 sowie Schraubenöffnungen 16 für den Durchtritt von Zylinderkopfschrauben ausgestanzt wurden - von den Brennraumöffnungen der Zylinderkopfdichtung zeigt die Fig. 1 nur eine einzige, deren Zentrum bzw. Achse mit 18 bezeichnet wurde.

Die Dichtungsplatte 10 setzt sich zusammen aus einem oberen Deckblech 20, einem unteren Deckblech 22 und einem dazwischen angeordneten Trägerblech 24 (im Sinne der vorstehenden Erfindungsdefinition bilden die beiden Deckbleche 20 und 22 also jeweils eine erste Blechlage, das Trägerblech 24 die zweite Blechlage). Die Abdichtung der Brennraumöffnung 14 bzw. des zugehörigen Brennraums gegen den Austritt von Brenngasen erfolgt mindestens im wesentlichen durch in der Draufsicht auf die Dichtungsplatte 10 kreisringförmige Sicken 26 und 28 in den beiden Deckblechen 20 und 22; diese Sicken verlaufen konzentrisch zur Brennraumöffnung 14 und sind bei der dargestellten Ausführungsform als sogenannte Vollsicken ausgebildet, welche in Richtung auf das Trägerblech 24 vorspringen. Die Sicken 26 und 28 müssen bei eingebauter Dichtung im Motorbetrieb im Sinne einer Abflachung senkrecht zur Dichtungsplatte 10 federelastisch verformbar sein, weshalb die Deckbleche 20 und 22 aus Federstahlblech bestehen.

Damit die beiden Sicken 26 und 28 im Motorbetrieb nicht übermäßig verformt, d. h. flachgedrückt werden, ist am Trägerblech 24 ein erfindungsgemäßer Stopper 30 ausgebildet. Dieser liegt bezüglich der Achse 18 der Brennraumöffnung 14 radial innerhalb der Sicken 26, 28, er könnte aber auch radial außerhalb dieser Sicken liegen oder es könnte sowohl radial innerhalb, als auch radial außerhalb der Sicken ein solcher Stopper vorgesehen sein. Es versteht sich ferner von selbst, daß die beiden Sicken 26 und 28 einander nicht exakt gegenüberliegen müßten - die Sicken müssen nur mindestens einem Stopper benachbart sein und radial außerhalb bzw. innerhalb des Stoppers liegen. Wie sich aus Fig. 1 ergibt, umschließt der Stopper 30 als kreisringförmiges Band (in einer Draufsicht auf das Trägerblech 24) die Brennraumöffnung 14, wobei bei der dargestellten Ausführungsform dieses Band überall dieselbe Breite aufweist, was jedoch nicht stets der Fall sein muß, da es sich bei manchen Zylinderkopfdichtungen empfehlen kann, die Breite des Stoppers in an sich bekannter Weise um die Brennraumöffnung herum zu variieren, d. h. einen breitenprofilierten Stopper vorzusehen.

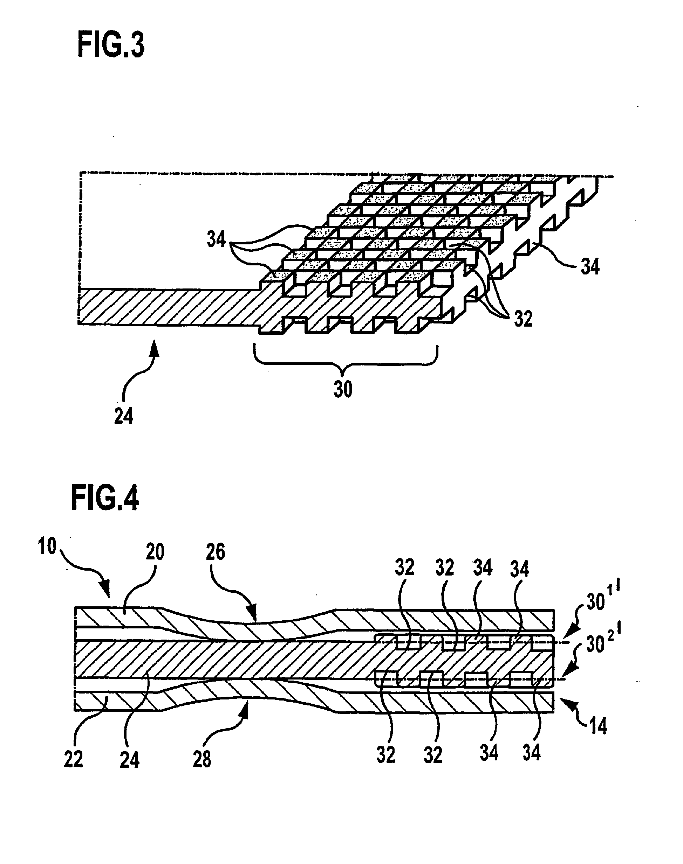

In Fig. 2 wurden die von den beiden Hauptoberflächen des originären Trägerblechs 24 definierten Hauptoberflächenebenen mit $30^1$ bzw. $30^2$ bezeichnet. In die beiden Hauptoberflächen des originären Trägerblechs 24 wurde durch Fließpressen eine Vielzahl von Vertiefungen 32 eingeprägt, was zum Aufwerfen einer Vielzahl von Erhebungen 34 führte; bei entsprechender Ausbildung des Fließpreßwerkzeugs bilden die Vertiefungen 32 und die Erhebungen 34 auf beiden Seiten des Trägerblechs 24 jeweils eine Art Schachbrettmuster, wie dies in Fig. 3 dargestellt wurde. Die Vertiefungen 32 erstrecken sich von der Hauptoberflächenebene $30^1$ bzw. $30^2$ in das Trägerblech 24 hinein, während die Erhebungen 34 sich von der Hauptoberflächenebene $30^1$ bzw. $30^2$ weg erstrecken, und zwar in Richtung auf das benachbarte Deckblech 20 bzw. 22. Der Überstand der Erhebungen 34 über die Hauptoberflächenebene $30^1$ bzw. $30^2$ ist bei der in Fig. 2 dargestellten Ausführungsform zu beiden Seiten des Trägerblechs 24 zumindest ungefähr gleich groß und kleiner als der Überstand der Kuppe der Sicke 26 über die untere Hauptoberfläche des oberen Deckblechs 20 bzw. der Überstand der Sicke 28 über die obere Hauptoberfläche des unteren Deckblechs 22. Sind die Sicken 26 und 28 unterschiedlich hoch, wird die Höhe der Erhebungen 34 an die unterschiedliche Sickenhöhe angepaßt, so daß der Überstand der gemäß Fig. 2 oberen Erhebungen 34 über die Hauptoberflächenebene $30^1$ sich vom Überstand der unteren Erhebungen 34 über die Hauptoberflächenebene $30^2$ unterscheidet.

Bei dem in den Figuren 2 und 3 dargestellten Stopper 30 ist das Gesamtvolumen der an der Oberseite des Trägerblechs 24 erzeugten Vertiefungen (welche sich ja von der Hauptoberflächenebene $30^1$ nach unten erstrecken) ungefähr gleich dem Gesamtvolumen der oberen Erhebungen 34 (welche sich von der Hauptoberflächenebene $30^1$ nach oben erstrecken); ebenso ist das Gesamtvolumen der an der Unterseite des Trägerblechs 24 erzeugten Vertiefungen 32 (oberhalb der Hauptoberflächenebene $30^2$) ungefähr gleich dem Gesamtvolumen der (sich von der Hauptoberflächenebene $30^2$ nach unten erstreckenden) unteren Erhebungen 34, so daß auch das Gesamtvolumen aller Vertiefungen ungefähr gleich dem Gesamtvolumen aller Erhebungen ist.

Wie sich aus den Figuren 2 und 3 in Verbindung mit der vorstehenden Beschreibung der Herstellung der Vertiefungen und Erhebungen ergibt, wurde der in den Figuren 2 und 3 dargestellte Stopper 30 so hergestellt, daß das beim Einprägen der Vertiefungen 32 verdrängte Material des Trägerblechs 24 um den jeweiligen Prägestempel herum hochsteigt und so auf derjenigen Seite des Trägerblechs 24, auf der die gerade betrachteten Vertiefungen 32 liegen, entsprechende Erhebungen 34 bildet. In diesem Zusammenhang ist zu beachten, daß bei dieser Ausführungsform die Vertiefungen 32 der einen Seite den Vertiefungen 32 der anderen Seite exakt gegenüberliegen.

Aus der vorstehenden Beschreibung der Herstellung des Stoppers 30 ergibt sich auch, daß die gemäß Fig. 2 oberen Vertiefungen 32 in ihrer Gestalt und Anzahl keineswegs identisch sein müssen mit den gemäß Fig. 2 unteren Vertiefungen 32, und natürlich gilt dann entsprechendes auch für die Erhebungen 34.

Da sich die in Fig. 4 dargestellte zweite Ausführungsform von derjenigen gemäß den Figuren 2 und 3 nur dadurch unterscheidet, daß den Vertiefungen 32 der einen Trägerblechseite Erhebungen 34 (und umgekehrt) gegenüberliegen, wurden in Fig. 4 dieselben Bezugszeichen wie in Fig. 2 verwendet, und es ist nur noch erforderlich, auf die Art der Herstellung des in Fig. 4 dargestellten Stoppers 30 näher einzugehen:

Bei der Herstellung der Vertiefungen 32 des in Fig. 4 dargestellten Stoppers 30 fließt das beim Einprägen einer Vertiefung 32 verdrängte Material in Richtung zur anderen Seite des Trägerblechs 24, wo deshalb eine der Vertiefung gegenüberliegende Erhebung 34 aufgeworfen wird.

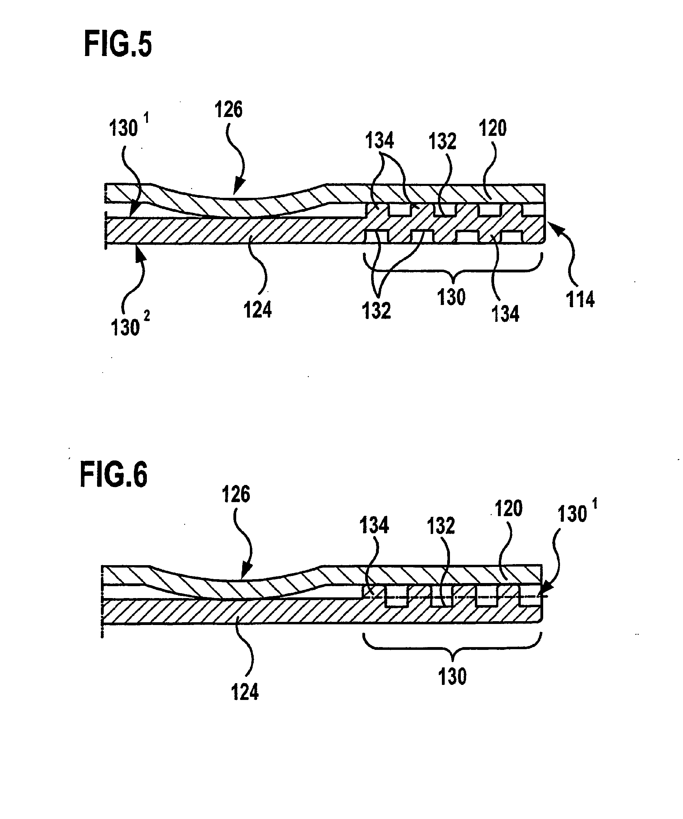

Bei der in Fig. 5 dargestellten Ausführungsform ist die Dichtungsplatte zweilagig und besitzt eine erste Blechlage 120 aus Federstahlblech, welche mit einer Sikke 126 versehen ist, sowie eine zweite Blechlage 124 mit einem der Sicke zugeordneten Stopper 130. Da bei dieser Zylinderkopfdichtung für jede Brennraumöffnung 114 nur eine einzige Sicke 126 vorgesehen ist, reicht es aus, wenn der Stopper 130 nur auf einer Seite der zweiten Blechlage 124 mit Erhebungen 134 versehen ist, welche über die Hauptoberflächenebene 130$^1$ der Blechlage 124 überstehen. Zur Erzeugung dieser Erhebungen wurden auf der anderen Seite der Blechlage 124 in diese Vertiefungen 132 eingeprägt, welche sich von der zweiten Hauptoberflächenebene 130$^2$ ausgehend in die zweite Blechlage 124 hineinerstrecken und von denen jede jeweils einer der Erhebungen 134 unmittelbar gegenüberliegt - die Erhebungen 134 werden deshalb beim Einprägen der Vertiefungen 132 aufgeworfen.

Die in Fig. 6 dargestellte Ausführungsform unterscheidet sich von derjenigen gemäß Fig. 5 nur dadurch, daß sich bei dem in Fig. 6 dargestellten Stopper 130 die Vertiefungen 132 und die Erhebungen 134 auf derselben Seite der zweiten Blechlage 124 befinden. Werden die Vertiefungen 132, ausgehend von der ersten Hauptoberflächenebene 130$^1$ der zweiten Blechlage 124, in diese Blechlage eingeprägt (wobei sich die Blechlage auf einer ebenen, durchgehenden Auflage abstützt), fließt das dabei verdrängte Material um die Prägestempel herum nach oben und bildet die Erhebungen 134.

Auch bei den Ausführungsformen gemäß den Figuren 5 und 6 ist das Gesamtvolumen der Vertiefungen 132 zumindest ungefähr gleich dem Gesamtvolumen der Erhebungen 134.

Natürlich muß bei zweilagigen Dichtungen (wie denjenigen nach den Figuren 5 und 6) die mit dem Stopper versehene Blechlage mindestens im Bereich der zu schützenden Sicke so dünn sein, daß sich die von der Sicke bewirkte Pressungserhöhung in einem ringförmigen Bereich auch auf der der Sicke gegenüberliegenden Seite der Dichtung auswirken kann.

Erfindungsgemäß kann die Verformungsbegrenzungsvorrichtung in ihrer Breite (in einer Draufsicht auf die zweite Blechlage) und/oder in ihrer Höhe (in einem Schnitt durch die zweite Blechlage) mit einem Profil versehen sein. Im Falle eines Breitenprofils variiert also die in bezüglich der Brennraumöffnung radialer Richtung gemessene Breite des Stoppers in Umfangsrichtung der Brennraumöffnung bzw. des Stoppers, z. B. dann, wenn zwischen zwei einander benachbarten Brennraumöffnungen nur wenig Platz zur Verfügung steht. Ist der Stopper höhenprofiliert, sind seine Erhebungen nicht alle gleich hoch, vielmehr variiert die Höhe der Erhebungen entsprechend einem vorgegebenen Höhenprofil des Stoppers, wobei sich dieses Höhenprofil insbesondere in Umfangsrichtung des Stoppers bzw. der zugehörigen Brennraumöffnung erstreckt, so daß in radialer Richtung nebeneinanderliegende Erhebungen des Stoppers alle gleich hoch sind. Eine Höhenprofilierung des Stoppers bringt insbesondere den Vorteil mit sich, daß sich die Pressung um eine Brennraumöffnung herum einstellen und insbesondere auch vergleichmäßigen läßt, so daß z. B. ein Verzug des zu der Brennraumöffnung gehörenden Zylinders verhindert werden kann. An Mehrzylindermotoren eignen sich höhenprofilierte Stopper aber auch dazu, Verzüge des Zylinderkopfs zu vermeiden oder zu verringern; wenn dies angestrebt wird, ist der Stopper normalerweise in erheblichem Abstand von der Brennraumöffnung und damit verhältnismäßig weit außerhalb der zu schützenden Sicke angeordnet.

**Patentansprüche**

1. Zylinderkopfdichtung mit einer mindestens eine Brennraumöffnung (14) aufweisenden Dichtungsplatte (10), welche wenigstens zwei Metallblechlagen (20, 22, 26) aufweist, von denen eine erste (20, 22) mit mindestens einer etastisch höhenverformbaren, die Brennraumöffnung (14) umschließenden Sicke (26, 28) und eine zweite (24) mit mindestens einer die Sickenverformung begrenzenden, die Brennraumöffnung (14) umgebenden und der Sicke (26, 28) in einer Draufsicht auf, die Dichtungsplatte (20, 22) benachbarten Verformungsbegrenzungsvorrichtung (30) er-Dichtungsplatte (20, 22) benachbarten Verformungsbegrenzungsvorrichtung (30) versehen ist, welche durch eine solche plastische Verformung der zweiten Blechlage (24) gebildet ist, daß die letztere in mindestens einer ihrer Hauptoberflächen im Bereich der Verformungsbegrenzungsvorrichtung (30) ein Muster von eingeprägten Vertiefungen (32) aufweist, welchen durch beim Einprägen der Vertiefungen (32) verdrängtes Material der zweiten Blechlage (24) gebildete Erhebungen (34) zugeordnet sind, wobei die Gesamtdicke der zweiten Blechlage (24) im Bereich der Verformungsbegrenzungsvorrichtung (30) größer ist als die originäre Dicke der zweiten Blechlage (24) in einem an die Verformungsbegrenzungsvorrichtung (30) angrenzenden Bereich der zweiten Blechlage (24) **dadurch gekennzeichnet, daß** die originäre zweite Blechlage (24) von einem durch Fließpressen plastisch verformbaren Stahlblech gebildet wird und in einer Draufsicht auf die zweite Blechlage (24) die Verformungsbegrenzungsvorrichtung (30) ein zweidimensionales Muster von diskreten, napfartigen Vertiefungen (32) bildet, wobei das Gesamtvolumen der durch Fließpressen eingeprägten Vertiefungen (22) mindestens ungefähr gleich dem Gesamtvolumen der durch das beim Einprägen der Vertiefungen (32) verdrängte Material der zweiten Blechlage gebildeten Erhebungen (34) ist.

2. Zylinderkopfdichtung nach Anspruch 1, **dadurch gekennzeichnet, daß** die Vertiefungen (32) und die Erhebungen (24) lediglich an einer der beiden Hauptoberflächen der zweiten Blechlage (24) gebildet sind.

3. Zylinderkopfdichtung nach Anspruch 1, **dadurch gekennzeichnet, daß** die Vertiefungen (32) lediglich in die eine Hauptoberfläche der zweiten Blechlage (24) eingeprägt und die Erhebungen (34) nur an der anderen Hauptoberfläche der zweiten Blechlage (24) ausgebildet sind.

4. Zylinderkopfdichtung nach Anspruch 1 **dadurch gekennzeichnet, daß** die Verformungsbegrenzungsvorrichtung (30) in einer Draufsicht auf jede der beiden Hauptoberflächen der zweiten Blechlage (24) jeweils ein zweidimensionales Muster von diskreten, eingeprägten napfartigen Vertiefungen (32) und ein zweidimensionales Muster von Erhebungen (34) bildet.

5. Zylinderkopfdichtung nach Anspruch 4, **dadurch** gekennzeichnft, daß jeder der in eine der Hauptoberflächen der zweiten Blechlage (24) eingeprägten Vertiefungen (32) auf der anderen Hauptoberfläche eine Erhebung (34) unmittelbar gegenüberliegt.

6. Zylinderkopfdichtung nach Anspruch 4, **dadurch gekennzeichnet, daß** die in die beiden Hauptoberflächen der zweiten Blechlage (24) eingeprägten Vertiefungen (32) einander jeweils unmittelbar gegenüberliegen.

7. Zylinderkopfdichtung nach einem der vorstehenden Ansprüche, **dadurch gekennzeichnet, daß** in einer Draufsicht auf die zweite Blechlage (24) die Verformungsbegrenzungsvorrichtung (30) ein zweidimensionales Muster von diskreten, noppenförmigen Erhebungen (34) bildet.

8. Zylinderkopfdichtung nach einem der vorstehenden Ansprüche, **dadurch gekennzeichnet, daß** die Kuppen der Erhebungen (34) ungefähr parallel zu der von der Dichtungsplatte (24) definierten Ebene verlaufen.

9. Zylinderkopfdichtung nach einem der vorstehenden Ansprüche, **dadurch gekennzeichnet, daß** die Erhebungen (34) unter den im Motorbetrieb auf die Erhebungen (34) ausgeübten Druckkräften zumindest nahezu unelastisch sind.

10. Zylinderkopfdichtung nach einem der vorstehenden Ansprüche, **dadurch gekennzeichnet, daß** die Erhebungen (34) unter den im Motorbetrieb auf die Erhebungen (34) ausgeübten Druckkräften zumindest nahezu keine plastischen Eigenschaften aufweisen.

11. Zylinderkopfdichtung nach einem der vorstehenden Ansprüche, **dadurch gekennzeichnet, daß** rings um die Brennraumöffnung (14) herum die senkrecht zur Dichtungsplatte (30) gemessene Federkonstante der Verformungsbegrenzungsvorrichtung (30) überall größer als diejenige der benachbarten Sicke (26, 28) ist.

12. Zylinderkopfdichtung nach einem der vorstehenden Ansprüche, **dadurch gekennzeichnet, daß** in einer Draufsicht auf die zweite Blechlage (24) die eingeprägten Vertiefungen (32) lediglich einen fertigungstechnisch bedingten minimalen Abstand voneinander aufweisen.

13. Zylinderkopfdichtung nach einem der vorstehenden Ansprüche, **dadurch gekennzeichnet, daß** in einer Draufsicht auf die Dichtungsplatte (10) die Verformungsbegrenzungsvorrichtung (30) radial innerhalb der benachbarten Sicke (26, 28) angeordnet ist.

14. Zylinderkopfdichtung nach einem der Ansprüche 1 bis 12, **dadurch gekennzeichnet, daß** in einer Draufsicht auf die Dichtungsplatte (10) sowohl radial innerhalb als auch radial außerhalb der Sicke (26, 28) jeweils eine Verformungsbegrenzungsvorrichtung (30) vorgesehen ist.

15. Zylinderkopfdichtung nach einem der vorstehenden Ansprüche, **dadurch gekennzeichnet, daß** die Vertiefungen (32) ein regelmäßiges Muster bilden.

16. Zylinderkopfdichtung nach einem der vorstehenden Ansprüche, **dadurch gekennzeichnet, daß** alle Vertiefungen (32) mindestens ungefähr gleich ausgebildet sind.

17. Zylinderkopfdichtung nach einem der vorstehenden Ansprüche, **dadurch gekennzeichnet, daß** alle Erhebungen (34) mindestens ungefähr gleich ausgebildet sind.

18. Zylinderkopfdichtung nach einem der Ansprüche 1 bis 15, **dadurch gekennzeichnet, daß** die Höhe der Erhebungen (34) um die Brennraumöffnung (14) herum entsprechend einem vorgegebenen Höhenprofil variiert.

19. Verfahren zur Herstellung einer Zylinderkopfdichtung nach einem der vorstehenden Ansprüche, **dadurch gekennzeichnet, daß** die Vertiefungen (32) und Erhebungen (34) durch Fließpressen erzeugt werden.

**20.** Verfahren nach Anspruch 19, **dadurch gekennzeichnet, daß** die Erhebungen (34) zunächst mit einer größeren als ihrer endgültigen Höhe erzeugt und sodann durch eine teilweise derartige Rückverformung auf ihre endgültige Höhe gebracht werden, daß die Kuppen der Erhebungen (34) ungefähr parallel zu der von der Dichtungsplatte (10) definierten Ebene verlaufen.

**Claims**

**1.** Cylinder head gasket with a gasket plate (10) having at least one combustion chamber opening (14) and comprising at least two sheet metal layers (20, 22, 24), a first one (20, 22) of which is provided with at least one bead (26, 28) which is elastically deformable in its height and encloses the combustion chamber opening (14), and a second one (24) of which is provided with at least one deformation delimiting device (30) delimiting deformation of the bead, surrounding the combustion chamber opening (14) and lying in the proximity of the bead (26, 28) in a plan view of the gasket plate (10), the deformation delimiting device being formed by such a plastic deformation of the second sheet metal layer (24) that the second sheet metal layer has in at least one of its main surfaces in the area of the deformation delimiting device (30) a pattern of stamped depressions (32) with which elevations (34) formed by material of the second sheet metal layer (24) displaced during the stamping of the depressions (32) are associated, the total thickness of the second sheet metal layer (24) in the area of the deformation delimiting device (30) being greater than the original thickness of the second sheet metal layer (24) in an area of the second sheet metal layer (24) adjoining the deformation delimiting device (30), **characterized in that** the original second sheet metal layer (24) is formed by a steel sheet which is plastically deformable by flow pressing, and in a plan view of the second sheet metal layer (24) the deformation delimiting device (30) forms a two-dimensional pattern of discrete, cup-like depressions (32), the total volume of the depressions (32) stamped by flow pressing being at least approximately equal to the total volume of the elevations (34) formed by the material of the second sheet metal layer that is displaced during the stamping of the depressions (32).

**2.** Cylinder head gasket in accordance with Claim 1, **characterized in that** the depressions (32) and the elevations (34) are formed on only one of the two main surfaces of the second sheet metal layer (24).

**3.** Cylinder head gasket in accordance with Claim 1, **characterized in that** the depressions (32) are stamped into only one main surface of the second sheet metal layer (24), and the elevations (34) are formed on only the other main surface of the second sheet metal layer (24).

**4.** Cylinder head gasket in accordance with Claim 1, **characterized in that** in a plan view of each of the two main surfaces of the second sheet metal layer (24), the deformation delimiting device (30) forms a two-dimensional pattern of discrete, cup-like, stamped depressions (32) and a two-dimensional pattern of elevations (34).

**5.** Cylinder head gasket in accordance with Claim 4, **characterized in that** each of the depressions (32) stamped into one of the main surfaces of the second sheet metal layer (24) has an elevation (34) lying directly opposite it on the other main surface.

**6.** Cylinder head gasket in accordance with Claim 4, **characterized in that** the depressions (32) stamped into the two main surfaces of the second sheet metal layer (24) lie directly opposite one another.

**7.** Cylinder head gasket in accordance with any one of the preceding claims, **characterized in that** in a plan view of the second sheet metal layer (24), the deformation delimiting device (30) forms a two-dimensional pattern of discrete, knob-like elevations (34).

**8.** Cylinder head gasket in accordance with any one of the preceding claims, **characterized in that** the crests of the elevations (34) extend approximately parallel to the plane defined by the gasket plate (10).

**9.** Cylinder head gasket in accordance with any one of the preceding claims, **characterized in that** the elevations (34) are at least almost inelastic under the pressure forces exerted on the elevations (34) during operation of the engine.

**10.** Cylinder head gasket in accordance with any one of the preceding claims, **characterized in that** the elevations (34) have at least almost no plastic properties under the pressure forces exerted on the elevations (34) during operation of the engine.

**11.** Cylinder head gasket in accordance with any one of the preceding claims, **characterized in that** the spring rate of the deformation delimiting device (30), measured perpendicularly to the gasket plate (10), is greater than that of the neighboring bead (26, 28) all around the combustion chamber opening (14).

**12.** Cylinder head gasket in accordance with any one of the preceding claims, **characterized in that** in a plan view of the second sheet metal layer (24), the stamped depressions (32) are spaced at only a minimum distance from one another which is necessitated by production technology.

13. Cylinder head gasket in accordance with any one of the preceding claims, **characterized in that** in a plan view of the gasket plate (10), the deformation delimiting device (30) is arranged radially inside the neighboring bead (26, 28).

14. Cylinder head gasket in accordance with any one of Claims 1 to 12, **characterized in that** in a plan view of the gasket plate (10), one deformation delimiting device (30) is provided radially inside the bead (26, 28) and one deformation delimiting device (30) is provided radially outside the bead (26, 28).

15. Cylinder head gasket in accordance with any one of the preceding claims, **characterized in that** the depressions (32) form a regular pattern.

16. Cylinder head gasket in accordance with any one of the preceding claims, **characterized in that** all depressions (32) are of at least approximately the same design.

17. Cylinder head gasket in accordance with any one of the preceding claims, **characterized in that** all elevations (34) are of at least approximately the same design.

18. Cylinder head gasket in accordance with any one of Claims 1 to 15, **characterized in that** the height of the elevations (34) around the combustion chamber opening (14) varies in accordance with a predetermined height profile.

19. Process for producing a cylinder head gasket in accordance with any one of the preceding claims, **characterized in that** the depressions (32) and elevations (34) are produced by flow pressing.

20. Process in accordance with Claim 19, **characterized in that** the elevations (34) are first produced with a larger height than their final height and are then reduced to their final height by such a partial reverse deformation that the crests of the elevations (34) extend approximately parallel to the plane defined by the gasket plate (10).

## Revendications

1. Joint de culasse avec une plaque d'étanchéité (10) présentant au moins une ouverture de chambre de combustion (14) et présentant au moins deux couches de tôle métallique (20, 22, 24) dont une première (20, 22) est munie d'au moins un creux (26, 28) déformable en hauteur de façon élastique et entourant l'ouverture de chambre de combustion (14) et dont une deuxième (24) est munie d'un dispositif de limitation de déformation (30), limitant la déformation du creux, entourant l'ouverture de chambre de combustion (14) et étant adjacent au creux (26, 28) dans une vue de dessus sur la plaque d'étanchéité (10), ledit dispositif étant formé par une déformation plastique de la deuxième couche de tôle (24) de telle sorte que cette dernière présente dans au moins une de ses surfaces principales dans la zone du dispositif de limitation de déformation (30) un motif d'empreintes (32) frappées auxquelles sont attribuées des bosses (34) formées par la matière de la deuxième couche de tôle, repoussée lors de la frappe des empreintes (32), dans lequel l'épaisseur totale de la deuxième couche de tôle (24) est supérieure dans la zone du dispositif de limitation de déformation (30) à l'épaisseur d'origine de la deuxième couche de tôle (24) dans une zone adjacente au dispositif de limitation de déformation (30) de la deuxième couche de tôle (24), **caractérisé en ce que** la deuxième couche de tôle (24) d'origine est formée par une tôle d'acier pouvant subir une déformation plastique par formage par fluage, et dans une vue de dessus sur la deuxième couche de tôle (24), le dispositif de limitation de déformation (30) forme un motif en deux dimensions d'empreintes (32) discrètes, de type cuvette, dans lequel le volume total des empreintes (32) frappées par formage par fluage est au moins approximativement égal au volume total des bosses (34) formées par la matière de la deuxième couche de tôle, repoussée lors de la frappe des empreintes (32).

2. Joint de culasse selon la revendication 1, **caractérisé en ce que** les empreintes (32) et les bosses (34) sont formées uniquement sur l'une des deux surfaces principales de la deuxième couche de tôle (24).

3. Joint de culasse selon la revendication 1, **caractérisé en ce que** les empreintes (32) sont frappées uniquement dans ladite une surface principale de la deuxième couche de tôle (24) et que les bosses (34) sont réalisées uniquement sur l'autre surface principale de la deuxième couche de tôle (24).

4. Joint de culasse selon la revendication 1, **caractérisé en ce que** le dispositif de limitation de déformation (30), dans une vue de dessus sur chacune des deux surfaces principales de la deuxième couche de tôle (24), forme respectivement un motif en deux dimensions d'empreintes (32) frappées, discrètes, de type cuvette, et un motif en deux dimensions de bosses (34).

5. Joint de culasse selon la revendication 4, **caractérisé en ce que** directement en face de chacune des empreintes (32) frappées dans l'une des surfaces principales de la deuxième couche de tôle (24) se trouve une bosse (34) sur l'autre surface principale.

6.  Joint de culasse selon la revendication 4, **caractérisé en ce que** les empreintes (32) frappées dans les deux surfaces principales de la deuxième couche de tôle (24) se trouvent respectivement directement opposées les unes aux autres.

7.  Joint de culasse selon l'une quelconque des revendications précédentes, **caractérisé en ce que** dans une vue de dessus sur la deuxième couche de tôle (24), le dispositif de limitation de déformation (30) forme un motif en deux dimensions de bosses (24) discrètes, en forme de picots.

8.  Joint de culasse selon l'une quelconque des revendications précédentes, **caractérisé en ce que** les sommets des bosses (34) s'étendent approximativement en parallèle au plan défini par la plaque d'étanchéité (24).

9.  Joint de culasse selon l'une quelconque des revendications précédentes, **caractérisé en ce que** les bosses (34) sont au moins presque rigides sous les forces de compression exercées sur les bosses (34) pendant le fonctionnement du moteur.

10. Joint de culasse selon l'une quelconque des revendications précédentes, **caractérisé en ce que** les bosses (34) présentent sous les forces de compression exercées sur les bosses (34) pendant le fonctionnement du moteur au moins presque pas de propriétés plastiques.

11. Joint de culasse selon l'une quelconque des revendications précédentes, **caractérisé en ce que** tout autour de l'ouverture de chambre de combustion (14), la constante de rappel mesurée perpendiculairement à la plaque d'étanchéité (10) du dispositif de limitation de déformation (30) est partout supérieure à celle du creux adjacent (26, 28).

12. Joint de culasse selon l'une quelconque des revendications précédentes, **caractérisé en ce que** dans une vue de dessus sur la deuxième couche de tôle (24), les empreintes (32) frappées présentent simplement un espacement minimal entre elles, dû à la technique de fabrication.

13. Joint de culasse selon l'une quelconque des revendications précédentes, **caractérisé en ce que** dans une vue de dessus sur la plaque d'étanchéité (10), le dispositif de limitation de déformation (30) est disposé radialement à l'intérieur du creux adjacent (26, 28).

14. Joint de culasse selon l'une quelconque des revendications 1 à 12, **caractérisé en ce que** dans une vue de dessus sur la plaque d'étanchéité (10), aussi bien radialement à l'intérieur que radialement à l'extérieur du creux (26, 28), respectivement un dispositif de limitation de déformation (30) est prévu.

15. Joint de culasse selon l'une quelconque des revendications précédentes, **caractérisé en ce que** les empreintes (32) forment un motif régulier.

16. Joint de culasse selon l'une quelconque des revendications précédentes, **caractérisé en ce que** toutes les empreintes (32) sont réalisées de façon au moins approximativement identique.

17. Joint de culasse selon l'une quelconque des revendications précédentes, **caractérisé en ce que** toutes les bosses (32) sont réalisées de façon au moins approximativement identique.

18. Joint de culasse selon l'une quelconque des revendications 1 à 15, **caractérisé en ce que** la hauteur des bosses (34) autour de l'ouverture de chambre de combustion (14) varie selon un profil de hauteur prédéfini.

19. Procédé de fabrication d'un joint de culasse selon l'une quelconque des revendications précédentes, **caractérisé en ce que** les empreintes (32) et les bosses (34) sont produites par formage par fluage.

20. Procédé selon la revendication 19, **caractérisé en ce que** les bosses (34) sont d'abord produites avec une hauteur supérieure à leur hauteur définitive, et sont ensuite ramenées à leur hauteur définitive par une déformation inverse partielle de telle sorte que les sommets des bosses (34) s'étendent approximativement en parallèle au plan défini par la plaque d'étanchéité (10).

EP 1 298 365 B1

## FIG.1

## FIG.2

# FIG.3

# FIG.4

# FIG.5

# FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9828559 A
- DE 29804534 U
- DE 10148295
- EP 0470790 A